# EUROPEAN PATENT SPECIFICATION

(11) **EP 2 764 634 B1**
(45) Date of publication and mention of the grant of the patent: **01.02.2017**
(21) Application number: 12837694.4
(22) Date of filing: 28.09.2012
(51) Int. Cl.: H04B 7/04, H04W 56/00, H04L 27/26, H04L 5/00, H04W 72/12

(54) **DOWNLINK TIMING REFERENCE FOR COORDINATED MULTIPOINT COMMUNICATION**
DOWNLINK-ZEITREFERENZ FÜR KOORDINIERTE MEHRPUNKTKOMMUNIKATION
RÉFÉRENCE DE TEMPS SUR LA LIAISON DESCENDANTE POUR UNE COMMUNICATION MULTIPOINT COORDONNÉE

(30) Priority: 03.10.2011 US 201161542683 P; 04.10.2011 US 201161543207 P; 25.09.2012 US 201213626572
(43) Date of publication of application: 13.08.2014
(73) Proprietor: Samsung Electronics Co., Ltd., Suwon-si, Gyeonggi-do 443-742 (KR)
(72) Inventor: NG, Boon Loong, Texas 75082 (US); ZHANG, Jianzhong, Plano Collin County, Texas 75093 (US); NAM, Young Han, Collin Country, Texas 75080 (US)
(74) Representative: Nederlandsch Octrooibureau
(86) International application number: PCT/KR2012/007938
(87) International publication number: WO 2013/051829

(56) References cited:
- EP-A1- 2 346 290
- EP-A1- 2 654 333
- WO-A1-2010/048899
- WO-A1-2011/063047
- US-A1- 2010 172 340
- US-A1- 2011 032 838
- US-A1- 2011 098 054
- "3rd Generation Partnership Project; Technical Specification Group Radio Access Network; Evolved Universal Terrestrial Radio Access (E-UTRA); Requirements for support of radio resource management (Release 10)", 3GPP STANDARD; 3GPP TS 36.133, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. V10.3.0, 21 June 2011 (2011-06-21), pages 1-457, XP050553335, [retrieved on 2011-06-21]
- "3rd Generation Partnership Project; Technical Specification Group Radio Access Network; Evolved Universal Terrestrial Radio Access (E-UTRA); Medium Access Control (MAC) protocol specification (Release 10)", 3GPP STANDARD; 3GPP TS 36.321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V10.2.0, 21 June 2011 (2011-06-21), pages 1-54, XP050553468, [retrieved on 2011-06-21]
- ALCATEL-LUCENT SHANGHAI BELL ET AL: "Timing alignment for UL CoMP", 3GPP DRAFT; R1-113330-UL TIMING ALIGNMENT_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Zhuhai; 20111010, 6 October 2011 (2011-10-06), XP050538595, [retrieved on 2011-10-06]

## Description

### [Technical Field]

The present application relates generally to multiple antenna wireless communication and, more specifically, to a method for determining a reference timing for coordinated multipoint communication.

### [Background Art]

The 3GPP is currently standardizing the Coordinated Multi-Point (CoMP) technology that allows the user equipment to receive signals from multiple transmission points (TPs) in different usage scenarios. The different scenarios include a homogeneous network with intra-site CoMP, a homogeneous network with high transmit (Tx) power remote radio heads (RRHs), a heterogeneous network with low-power RRHs within the macro cell coverage where the transmission/reception points created by the RRHs have different cell IDs from the macro cell, and a heterogeneous network with low power RRHs within the macro cell coverage where the transmission/reception points created by the RRHs have the same cell IDs as the macro cell. The CoMP communication schemes that have been identified as the focus for standardization are joint transmission (JT); dynamic point selection (DPS), including dynamic point blanking; and coordinated scheduling/beamforming, including dynamic point blanking.

"3rd Generation Partnership Project; Technical Specification Group Radio Access Network; Evolved Universal Terrestrial Radio Access (E-UTRA); Requirements for support of radio resource management (Release 10)", 3GPP STANDARD; 3GPP TS 36.133, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. VI 0.3.0, 21 June 2011 (2011-06-21), pages 1-457, XP050553335, discloses UE shall adjust the timing of its uplink transmission timning at sub-frame n+6 for a timing advancement command received in sub-frame n. The UE shall adjust the timing of its transmissions with a relative accuracy better than or equal to ±4* Tₛ seconds to the signaled timing advance value compared to the timing of preceding uplink transmission.

"3rd Generatioin Partnersip Project; Technical Specification Group Radio Access Network; Evolved Universal Terrestrial Radio Access (E-UTRA); Medium Access Control (MAC) protocol specification (Release 10)", 3GPP STANDARD; 3GPP TS 36.321,3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. VI 0.2.0, 21 June 2011 (2011 -06-21), pages 1-54, XP050553468, discloses maintenance of uplink time alignment by a configurable timer which is used to control how long the UE is considered uplink time aligned.

WO 2010/048899 A1 discloses identifying a reference signal, among reference signals that a femto base station receives from a neighboring macro base station, that is first received within one observation window as a desired reference signal.

US 2010/172340 A1 discloses that an additional control unit calculates a signal that is received from TPs located in different places.

### [Disclosure of Invention]

### [Technical Problem]

There is a need in the art for improved standards for use in CoMP usage scenarios and CoMP communication schemes. In particular, there is a need for a method, apparatus and system that are capable of determining a downlink timing reference for CoMP communication.

### [Solution to Problem]

A method as in claim 1.

An apparatus as in claim 7.

### [Advantageous Effects of Invention]

Embodiments of the present disclosure provide methods to determine the downlink timing reference for CoMP reception at the user equipment.

### [Brief Description of Drawings]

For a more complete understanding of the present disclosure and its advantages, reference is now made to the following description taken in conjunction with the accompanying drawings, in which like reference numerals represent like parts:
FIGURE 1 illustrates an exemplary wireless system which transmits messages in accordance with an illustrative embodiment of the present disclosure;
FIGURE 2 illustrates a high-level diagram of an orthogonal frequency division multiple access transmit path in accordance with an illustrative embodiment of the present disclosure;
FIGURE 3 illustrates a high-level diagram of an orthogonal frequency division multiple access receive path in accordance with an illustrative embodiment of the present disclosure;
FIGURE 4 illustrates a block diagram of exemplary user equipment that may be used to implement various embodiments of the present disclosure;
FIGURE 5 illustrates an exemplary wireless network for CoMP communication in accordance with an illustrative embodiment of the present disclosure;
FIGURE 6 illustrates a reference timing for reception of a downlink CoMP transmission in accordance with an illustrative embodiment of the present disclosure;
FIGURE 7 illustrates uplink and downlink transmission and reception timing for CoMP communication in accordance with an illustrative embodiment of the present disclosure;
and
FIGURE 8 illustrates a process for determining a timing reference in accordance with various embodiments of the present disclosure.

### [Mode for the Invention]

A method, apparatus and system determine a timing reference for coordinated multipoint communications.

A method for operating an user equipment is provided. The method includes receiving one or more signals from one or more transmission points for a coordinated multi-point (CoMP) transmission. The method also includes identifying a timing reference for receiving the coordinated multi-point (CoMP) transmission as a time when a signal is first received from one of the transmission points. In various embodiments, the timing reference may be based on at least one of a reference signal, a frame, a subframe, and an orthogonal frequency-division multiplexing symbol that is received first in time when configuring the user equipment for reception of the CoMP transmission.

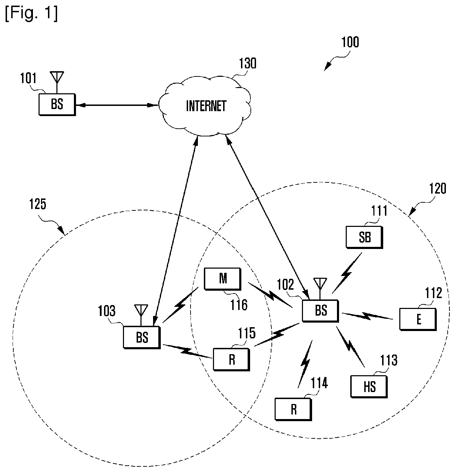

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, where such a device may be implemented in hardware that is programmable by firmware or software. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases. FIGURES 1 through 8, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

The various embodiments of the present disclosure recognize that when downlink CoMP transmission is configured for user equipment, different transmission points may have unequal distances or different paths to the user equipment. With different distances for transmission paths or other delays due to path differences, the downlink timing arrival at the user equipment from the different transmission points can be different. As a result, the downlink timing determined by the user equipment for downlink CoMP transmission will be suboptimal, which degrades the performance of CoMP (e.g. joint transmission or dynamic point selection CoMP). For example, using a timing reference from a distant transmission point may result in the user equipment missing part of a transmission from a closer transmission point.

Accordingly, embodiments of the present disclosure provide methods to determine the downlink timing reference for CoMP reception at the user equipment. In various embodiments, the determination of the downlink timing reference is based on a reference signal that is received first in time from among the transmission points regardless of which transmission point is the reference cell. Using the reference signal that is received first in time allows the user equipment to avoid missing portions of transmissions from the set of transmission points.

FIGURES 1-3 below describe various embodiments implemented in wireless communications systems and with the use of OFDM or OFDMA communication techniques. The description of FIGURES 1-3 is not meant to imply physical or architectural limitations to the manner in which different embodiments may be implemented. Different embodiments of the present disclosure may be implemented in any suitably arranged communications system.

FIGURE 1 illustrates exemplary wireless system 100, which transmits messages according to the principles of the present disclosure. In the illustrated embodiment, wireless system 100 includes transmission points (e.g., an Evolved Node B (eNB), Node B), such as base station (BS) 101, base station (BS) 102, base station (BS) 103, and other similar base stations or relay stations (not shown). Base station 101 is in communication with base station 102 and base station 103. Base station 101 is also in communication with Internet 130 or a similar IP-based system (not shown).

Base station 102 provides wireless broadband access (via base station 101) to Internet 130 to a first plurality of subscriber stations (e.g., user equipment (UE)) within coverage area 120 of base station 102. The first plurality of subscriber stations includes subscriber station 111, which may be located in a small business (SB); subscriber station 112, which may be located in an enterprise (E); subscriber station 113, which may be located in a WiFi hotspot (HS); subscriber station 114, which may be located in a first residence (R); subscriber station 115, which may be located in a second residence (R); and subscriber station 116, which may be a mobile device (M), such as a cell phone, a wireless laptop, a wireless PDA, or the like.

Base station 103 provides wireless broadband access (via base station 101) to Internet 130 to a second plurality of subscriber stations within coverage area 125 of base station 103. The second plurality of subscriber stations includes subscriber station 115 and subscriber station 116. In an exemplary embodiment, base stations 101-103 may communicate with each other and with subscriber stations 111-116 using OFDM or OFDMA techniques.

While only six subscriber stations are depicted in FIGURE 1, it is understood that wireless system 100 may provide wireless broadband access to additional subscriber stations. It is noted that subscriber station 115 and subscriber station 116 are located on the edges of both coverage area 120 and coverage area 125. Subscriber station 115 and subscriber station 116 each communicate with both base station 102 and base station 103 and may be said to be operating in handoff mode, as known to those of skill in the art.

Subscriber stations 111-116 may access voice, data, video, video conferencing, and/or other broadband services via Internet 130. In an exemplary embodiment, one or more of subscriber stations 111-116 may be associated with an access point (AP) of a WiFi WLAN. Subscriber station 116 may be any of a number of mobile devices, including a wireless-enabled laptop computer, personal data assistant, notebook, handheld device, or other wireless-enabled device. Subscriber stations 114 and 115 may be, for example, a wireless-enabled personal computer (PC), a laptop computer, a gateway, or another device.

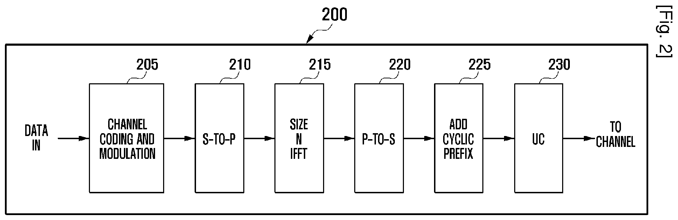

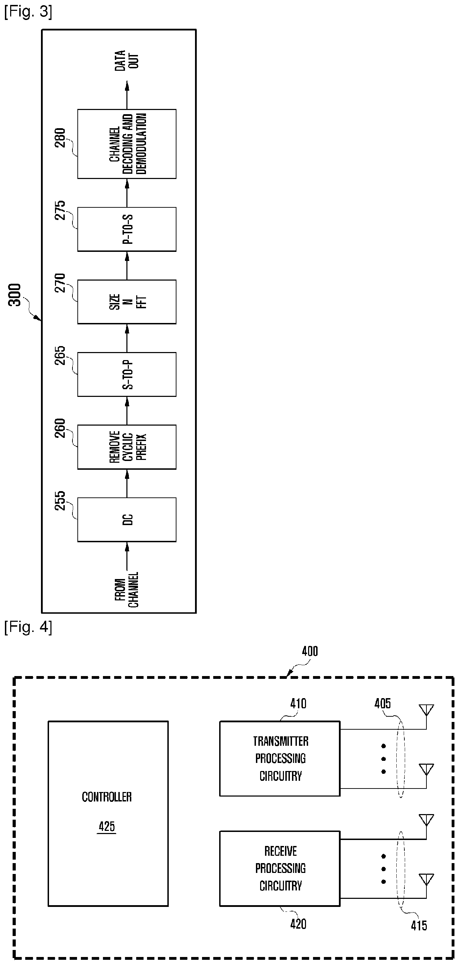

FIGURE 2 is a high-level diagram of transmit path circuitry 200. For example, the transmit path circuitry 200 may be used for an orthogonal frequency division multiple access (OFDMA) communication. FIGURE 3 is a high-level diagram of receive path circuitry 300. For example, the receive path circuitry 300 may be used for an orthogonal frequency division multiple access (OFDMA) communication. In FIGURES 2 and 3, for downlink communication, the transmit path circuitry 200 may be implemented in base station (BS) 102 or a relay station, and the receive path circuitry 300 may be implemented in a subscriber station (e.g. subscriber station 116 of FIGURE 1). In other examples, for uplink communication, the receive path circuitry 300 may be implemented in a base station (e.g. base station 102 of FIGURE 1) or a relay station, and the transmit path circuitry 200 may be implemented in a subscriber station (e.g. subscriber station 116 of FIGURE 1).

Transmit path circuitry 200 comprises channel coding and modulation block 205, serial-to-parallel (S-to-P) block 210, Size N Inverse Fast Fourier Transform (IFFT) block 215, parallel-to-serial (P-to-S) block 220, add cyclic prefix block 225, and up-converter (UC) 230. Receive path circuitry 300 comprises down-converter (DC) 255, remove cyclic prefix block 260, serial-to-parallel (S-to-P) block 265, Size N Fast Fourier Transform

(FFT) block 270, parallel-to-serial (P-to-S) block 275, and channel decoding and demodulation block 280.

At least some of the components in FIGURES 2 and 3 may be implemented in software, while other components may be implemented by configurable hardware or a mixture of software and configurable hardware. In particular, it is noted that the FFT blocks and the IFFT blocks described in this disclosure document may be implemented as configurable software algorithms, where the value of Size N may be modified according to the implementation.

Furthermore, although this disclosure is directed to an embodiment that implements the Fast Fourier Transform and the Inverse Fast Fourier Transform, this is by way of illustration only and should not be construed to limit the scope of the disclosure. It will be appreciated that in an alternate embodiment of the disclosure, the Fast Fourier Transform functions and the Inverse Fast Fourier Transform functions may easily be replaced by Discrete Fourier Transform (DFT) functions and Inverse Discrete Fourier Transform (IDFT) functions, respectively. It will be appreciated that for DFT and IDFT functions, the value of the N variable may be any integer number (i.e., 1, 2, 3, 4, etc.), while for FFT and IFFT functions, the value of the N variable may be any integer number that is a power of two (i.e., 1, 2, 4, 8, 16, etc.).

In transmit path circuitry 200, channel coding and modulation block 205 receives a set of information bits, applies coding (e.g., LDPC coding) and modulates (e.g., Quadrature Phase Shift Keying (QPSK) or Quadrature Amplitude Modulation (QAM)) the input bits to produce a sequence of frequency-domain modulation symbols. Serial-to-parallel block 210 converts (i.e., de-multiplexes) the serial modulated symbols to parallel data to produce N parallel symbol streams where N is the IFFT/FFT size used in BS 102 and SS 116. Size N IFFT block 215 then performs an IFFT operation on the N parallel symbol streams to produce time-domain output signals. Parallel-to-serial block 220 converts (i.e., multiplexes) the parallel time-domain output symbols from Size N IFFT block 215 to produce a serial time-domain signal. Add cyclic prefix block 225 then inserts a cyclic prefix to the time-domain signal. Finally, up-converter 230 modulates (i.e., up-converts) the output of add cyclic prefix block 225 to RF frequency for transmission via a wireless channel. The signal may also be filtered at baseband before conversion to RF frequency.

The transmitted RF signal arrives at SS 116 after passing through the wireless channel, and reverse operations to those at BS 102 are performed. Down-converter 255 down-converts the received signal to baseband frequency, and remove cyclic prefix block 260 removes the cyclic prefix to produce the serial time-domain baseband signal. Serial-to-parallel block 265 converts the time-domain baseband signal to parallel time-domain signals. Size N FFT block 270 then performs an FFT algorithm to produce N parallel frequency-domain signals. Parallel-to-serial block 275 converts the parallel frequency-domain signals to a sequence of modulated data symbols. Channel decoding and demodulation block 280 demodulates and then decodes the modulated symbols to recover the original input data stream.

Each of base stations 101-103 may implement a transmit path that is analogous to transmitting in the downlink to subscriber stations 111-116 and may implement a receive path that is analogous to receiving in the uplink from subscriber stations 111-116. Similarly, each one of subscriber stations 111-116 may implement a transmit path corresponding to the architecture for transmitting in the uplink to base stations 101-103 and may implement a receive path corresponding to the architecture for receiving in the downlink from base stations 101-103.

FIGURE 4 illustrates a block diagram of exemplary user equipment 400 that may be used to implement various embodiments of the present disclosure. For example, the user equipment 400 is an example of one embodiment of the subscriber station 116 in FIGURE 1. User equipment 400 comprises transmit (Tx) antennas 405, transmit (Tx) processing circuitry 410, receive (Rx) antennas 415, and receive (Rx) processing circuitry 420 and controller 425.

Tx processing circuitry 410 receives analog or digital signals from outgoing baseband data. Tx processing circuitry 410 encodes, multiplexes, and/or digitizes the outgoing baseband data to produce a processed RF signal that is transmitted via Tx antennas 405. Tx processing circuitry 410 may also perform spatial multiplexing via layer mapping to different antennas in Tx antennas 405.

Rx processing circuitry 420 receives from Rx antennas 415 an incoming RF signal or signals transmitted by one or more transmission points, such as base stations, relay stations or remote radio heads. Rx processing circuitry 420 processes the received signal(s) to identify the information transmitted by the transmission point(s). For example, the Rx processing circuitry 420 may down-convert the incoming RF signal(s) to produce an intermediate frequency (IF) or a baseband signal by channel estimation, demodulating, stream separating, filtering, decoding, and/or digitizing the received signal(s).

Controller 425 controls the overall operation of user equipment 400. In one such operation, controller 425 controls the reception of channel signals and the transmission of channel signals by Rx processing circuitry 420 and Tx processing circuitry 410, in accordance with well-known principles.

The embodiment of user equipment 400 illustrated in FIGURE 4 is for illustration only. Other embodiments of the user equipment 400 could be used without departing from the scope of this disclosure. For example, the antennas in the Tx and Rx antenna arrays may overlap or be the same antenna arrays used for transmission and reception via one or more antenna switching mechanisms.

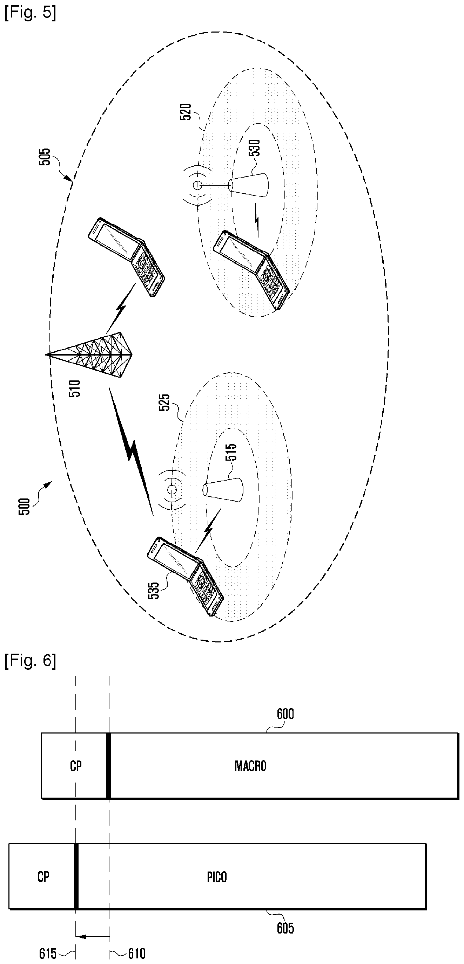

FIGURE 5 illustrates an exemplary wireless network 500 for CoMP communication in accordance with an illustrative embodiment of the present disclosure. Wireless network 500 includes a macro cell 505 of a macro node or macro base station 510 (e.g., a macro eNB) and pico nodes 515 and 520 (e.g., RRH, relay station or underlay base station) having pico cells 525 and 530, respectively. In this illustrative example, the macro node 510 and/or pico node 515 may be used as transmission points for CoMP for user equipment 535.

FIGURE 6 illustrates a reference timing for reception of a downlink CoMP transmission in accordance with an illustrative embodiment of the present disclosure. For example, the frames 600 and 605 are examples of receipt timing at the user equipment 535 of downlink frames transmitted by the macro node 510 and pico node 515, respectively, from FIGURE 5. As illustrated, because the user equipment 535 is closer to the pico node 515, the downlink frame 605 is received first in time compared with the downlink frame 600 transmitted from the further macro node 510.

For example, if the user equipment 535 is configured as a macro user equipment (i.e., the macro cell is the primary reference cell), the user equipment 535 would use the timing reference 610 as the reference timing for reception e.g., the FFT timing. In this scenario, there is a timing error when receiving signals from the pico node which cannot be recovered with post-FFT timing adjustment. For example, the portion of the downlink frame 605 prior to the timing reference 610 is lost and may not be able to be recovered without retransmission, which increases overhead and transmission inefficiency.

Accordingly, in various embodiments of the present disclosure, when downlink CoMP transmission (e.g. a joint transmission or dynamic point selection CoMP) is configured, the downlink timing reference for CoMP reception is defined as the time when (e.g., the first detected path in time) the corresponding downlink frame is received from the reference cell or reference transmission point. In other embodiments, the downlink timing reference for CoMP reception may be defined as the time when a corresponding reference signal, downlink subframe and/or OFDM symbol is received from the reference cell or reference transmission point.

The user equipment 535 may determine the downlink timing of a TP/cell from a reference signal received from the TP/cell (e.g., the primary synchronization signal (PSS), the secondary synchronization signal (SSS), the cell-specific reference signal (CRS), the channel-state-information reference signal (CSI-RS), and/or some other reference signal. For example, the transmission point may correspond to a CSI-RS resource configuration (e.g. index tuple of config index, subframe config index and number of CSI-RS ports).

Returning to the example illustrated in FIGURE 6, according to various embodiments of the present disclosure, the downlink timing reference for CoMP reception is determined as the timing reference 615, because the frame 605 is received first in time at the user equipment 535. Using timing reference 615, the user equipment 535 is able to receive the entirety of the frame 605. Also, while there may be a timing error or inconsistency when receiving signals from the macro node, the user equipment can recover from the timing inconsistency with a post-FFT timing adjustment.

In some embodiments of the present disclosure, the timing reference may be defined as a transmission point belonging to the CoMP measurement set with the earliest path arrival (e.g., min {t1, t2,...,tn}, where tk is the path arrival timing for transmission point k and n is the number of transmission points). A CoMP measurement set is a set of points about which channel state/statistical information related to their link to the UE is measured and/or reported.

One advantage of this timing reference determination is that the need for additional signaling of the reference TP/cell can be avoided. For example, if a transmission point (e.g., transmission point A) is chosen among 3 transmission points (transmission point A, transmission point B, and transmission point C) by the network for downlink transmission in subframe n (dynamic point selection), but transmission point C was determined by the user equipment 535 to have the earliest detected received frame, the downlink timing reference for subframe n shall be according to transmission point C.

In some embodiments of the present disclosure, the timing reference may be defined as a transmission point signaled by the network (e.g., among the uplink CoMP set). One advantage of this timing reference determination is that the network has increased flexibility. In some embodiments, the network may also signal the physical signals to be used by the user equipment to achieve downlink timing synchronization for downlink CoMP reception, e.g. either CRS or CSI-RS. An advantage of this embodiment is that potentially strong multi-paths from a TP/cell that arrive early at the user equipment are not missed by the user equipment in the downlink reception for CoMP, thereby improving the performance of CoMP.

In various embodiments of the present disclosure, the reference timing is determined when configuring the CoMP communication. For example, the user equipment 535, e.g., under condition of being located in a cell overlap, may switch to a CoMP communication mode. In this example, when configuring the CoMP mode, the user equipment 535 may detect reference signals and determine the first in time for the timing reference. In other examples, the reference timing may be determined when configuring the CoMP measurement set. As used herein, a configuration of CoMP measurement set may be a configuration of multiple CSI-RS or a configuration of resources for CSI feedback reporting purposes. In these examples, when the CoMP set is configured, the user equipment 535 may determine the reference timing from receipt times of reference signals from the CoMP set.

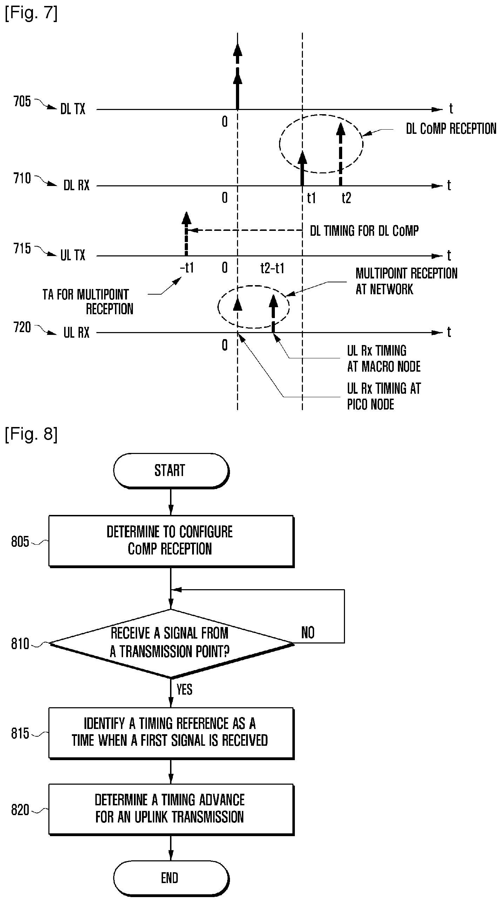

FIGURE 7 illustrates uplink and downlink transmission and reception timing for CoMP communication in accordance with an illustrative embodiment of the present disclosure. As illustrated, downlink transmission 705 by transmission points (e.g., the macro node 510 and the pico node 515) in the network occurs at a time 0 for a downlink frame. Downlink reception 715 of the pico node 515 and the macro node 510 transmissions occurs at the user equipment 535 at times t1 and t2, respectively, with t1 determined as the downlink reference timing for reception of the CoMP transmission at the user equipment 535.

As illustrated in FIGURE 7, in various embodiments, the downlink reference timing, as defined herein, may also be used as a reference for uplink transmission timing adjustment (TA). In this illustrative example, the downlink reference timing is used as a timing adjustment to adjust the uplink transmission 710 to occur at a time ?t1. As illustrated, the uplink multipoint reception 720 of the uplink transmission 715 is received at the pico node 515 at a time 0 for an uplink frame with the reception at the macro node 510 at a time t2-t1.

In other example embodiments, the timing adjustment may be determined from a timing adjustment command with respect to the downlink timing reference. In this example, the user equipment 535 derives the uplink transmission timing accordingly for uplink transmission (e.g., regardless of uplink CoMP or not).

In another example, multiple timing adjustments with respect to the downlink timing reference may be used (e.g. one per transmission point, if TP-specific timing adjustment is configured). In this example, the user equipment 535 derives the uplink transmission timing per transmission point based on the multiple timing adjustments. For example, the principles of the present disclosure may be extended to embodiments where multiple downlink timing references are defined (e.g., one for non-downlink CoMP and one for downlink CoMP, or different downlink timing reference for different transmission points in the downlink CoMP transmission set).

In various embodiments, the downlink CoMP schemes described herein include dynamic point selection and joint transmission. Similar to the downlink, the uplink channel delay spread for multi-point reception can also be assumed to be a fraction of the cyclic prefix (CP) length. The uplink transmission timing can be different for single point and multi-point reception. In embodiments where dynamic switching between single point (TP-specific) and multi-point reception (e.g., TP-common) is utilized, the user equipment transmission timing may be based on the closest transmission point, regardless of single-point or multi-point transmission. In this way, a single timing adjustment mechanism can still be maintained. In other examples, the user equipment 535 may switch between different transmission reference timing, one for single-point reception and another for multi-point reception. In this case, multiple timing adjustments are maintained by the user equipment 535.

In various embodiments, transmission and reception timing for user equipment may be determined according to the examples below. Define tₖ as the path delay for TP/RP k (i.e., TP = Transmission Point, RP = Reception Point). Denote the downlink CoMP set (the set of transmission points) as DC and the uplink CoMP set (the set of RPs) as UC. For example, the DC and/or UC can be independently configured by the network, e.g. DC can be the CoMP measurement set and UC can also be the CoMP measurement set or another cooperation set configured by the network. In other examples, the user equipment may not be aware of UC and UC is only known to the network.

When downlink single-point transmission and uplink single-point reception are configured, the user equipment Rx-Tx difference is defined as tₖ + t_{k'} where k is the transmission point used for downlink transmission, and k' is the RP used for uplink reception. When downlink multi-point transmission and uplink single-point reception are configured, the user equipment Rx-Tx difference is defined as min {tₖ} + t_{k'} for k belonging to the set DC and k' is the RP used for uplink reception. When the downlink multi-point transmission and uplink multi-point reception are configured, the user equipment Rx-Tx difference is defined as min {tₖ} + min {t_{k'}} for k belonging to the set DC and k' belonging to the set UC. For example, if k=k', then the user equipment Rx-Tx difference is 2*tₖ. When downlink single-point transmission and uplink multi-point reception are configured, the user equipment Rx-Tx difference is defined as tₖ + min {t_{k'}} for k' belonging to the set UC and where k is the transmission point used for downlink transmission.

Since the configuration of downlink CoMP can change the downlink reference timing for the user equipment, the user equipment may also adjust the uplink transmission timing if the transmission timing error and the downlink reference timing exceeds the specified threshold (12*T_{S} or approximately 7.8% of the CP length for bandwidth (BW) of ≥ 3 MHz). This can result in unnecessary autonomous uplink transmission timing readjustment by the user equipment. However, it is expected that the downlink reference timing change will be slow; hence there may not be frequent user equipment autonomous timing adjustment. The network can correct the user equipment timing by sending timing adjustment commands.

In various embodiments, the change in downlink reference timing for CoMP may trigger autonomous user equipment transmission timing adjustment. However, because it is expected that the downlink reference timing change will be slow, there may not be frequent user equipment autonomous timing adjustment. The network can correct the user equipment timing by sending timing adjustment commands.

The illustrations in FIGURES 5-7 are intended as illustrative examples of the present disclosure and are not intended as limitation on the various embodiments that may be implemented in accordance with the principals of the present disclosure. For example, embodiments of the present disclosure may be implemented in an intra-cell CoMP scheme where the transmission points in the wireless network 500 share the same cell identifier. In other examples, embodiments of the present disclosure may be implemented in an inter-cell CoMP scheme where the transmission points in the wireless network 500 have a different cell identifier. In other examples, the CoMP for the user equipment may be configured for a primary serving cell and at least one secondary serving cell among cells for different base stations. In this example, the user equipment determines the downlink reference timing as described above as the first downlink frame received in time regardless of denotation of the primary and secondary serving cell status.

In other examples, any number of multiple transmission points may participate in the CoMP examples beyond the two transmission points in accordance with the principals of the present disclosure. For example, more than two transmission points may transmit downlink frames to the user equipment 535. In this example, the downlink reference timing would be based on the downlink frame received first in time at the user equipment 535.

FIGURE 8 illustrates a process for determining a timing reference in accordance with various embodiments of the present disclosure. For example, the process depicted in

FIGURE 8 may be performed by the controller 425 and the Rx processing circuitry 420 in FIGURE 4. The process may also be implemented by the user equipment 535 in FIGURE 5.

The process begins by determining to configure CoMP reception (step 805). For example, in step 805, the process may determine to configure the user equipment 535 for reception of a CoMP transmission. This may occur, for example, in response to a request to configure the user equipment for a CoMP communication mode. In another example, the configuration of the user equipment 535 may occur in response to a request to configure a CoMP measurement set.

The process then determines whether a signal has been received from a transmission point (step 810). For example, in step 810, the user equipment 535 may receive a signal from one of the transmission points for the CoMP transmission. In step 810, the signal may be a reference signal, a downlink frame or subframe, and/or an OFDM symbol. The reference signal may be a primary synchronization signal, a secondary synchronization signal, a cell-specific reference signal, and a channel-state-information reference signal. If the signal is not received, the process continues to wait for a signal from a transmission point.

When the signal is received, the process identifies a timing reference as a time when a first signal is received (step 815). For example, in step 815, the process may use the timing reference to configure to user equipment 535 for reception of a CoMP transmission. The signal may be a reference signal, a downlink frame or subframe, and/or an OFDM symbol that is received from one of the transmission points. The user equipment 535 may determines the timing reference from the signal that is received first in time at the user equipment 535 from among signals received from the transmission points in the CoMP measurement set. In another example, the timing reference may be defined as an earliest path arrival timing among transmission points in a CoMP measurement set. In other examples, the timing may be identified from a network signal received at the user equipment 535 that includes information about a transmission point whose reference signal is to be used as the timing reference.

The process then determines a timing advance for an uplink transmission (step 820). For example, in step 820, the process may use the timing reference as the timing advance for the uplink transmission for multipoint reception by receive points in the network (e.g., the macro node 510 and the pico node 515 in FIGURE 5).

The various embodiments of the present disclosure recognize that when downlink CoMP transmission is configured for an user equipment, different transmission points may have unequal distances to the user equipment. With different distances for transmission paths, the downlink timing arrival at the user equipment from the different transmission points can be different. As a result, the downlink timing determined by the user equipment for downlink CoMP transmission will be suboptimal, which degrades the performance of CoMP (e.g. joint transmission or dynamic point selection CoMP). For example, using a timing reference from a distant transmission point may result in the user equipment missing part of a transmission from a closer transmission point. Embodiments of the present disclosure provide methods to determine the downlink timing reference for CoMP in configuring the user equipment for CoMP reception. In various embodiments, the determination of the downlink timing reference is based on a reference signal that is received first in time from among the transmission points regardless of which transmission point is the reference cell. Using the reference signal that is received first in time allows the user equipment to avoid missing portions of transmissions from the set of transmission points. Additionally, in various embodiments, the user equipment may use the downlink reference timing in calculating timing adjustments for uplink transmissions.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method of operating an user equipment, the method comprising:
receiving one or more signals from one or more transmission points for a coordinated multi-point, CoMP, transmission;
identifying a timing reference as a time when a first signal is received from the transmission points (815); and
determining a timing advance for an uplink transmission for multipoint reception based on the identified timing reference (820).

2. The method of Claim 1, wherein the timing reference is based on at least one of a reference signal, a frame, a subframe, and an orthogonal frequency-division multiplexing symbol that is received first in time when configuring the user equipment for reception of the CoMP transmission.

3. The method of Claim 1, wherein identifying the timing reference for the CoMP reception (815) comprises:
identifying the timing reference as an earliest path arrival timing among transmission points in a CoMP measurement set.

4. The method of Claim 1, wherein identifying the timing reference for the CoMP reception (815) comprises:
identifying the timing reference from a network signal comprising information about a transmission point whose reference signal is to be used as the timing reference.

5. The method of Claim 1, wherein identifying the timing reference for the CoMP reception (815) comprises:
identifying the timing reference in response to a request to configure a CoMP communication mode.

6. The method of Claim 1, wherein identifying the timing reference for the CoMP reception (815) comprises:
identifying the timing reference in response to a request to configure a CoMP measurement set,
wherein identifying the timing reference for the CoMP reception comprises:
identifying the timing reference from one of a primary synchronization signal, a secondary synchronization signal, a cell-specific reference signal, and a channel-state-information reference signal.

7. An apparatus for an user equipment, the apparatus comprising:
a receiver (420) configured to receive one or more signals from one or more transmission points for a coordinated multi-point, CoMP transmission; and
a controller (425) configured to identify a timing reference as a time when a first signal is received from the transmission points and determine a timing advance for an uplink transmission for multipoint reception based on the identified timing reference.

8. The apparatus of Claim 7, wherein the timing reference is based on at least one of a reference signal, a frame, a subframe, and an orthogonal frequency-division multiplexing symbol that is received first in time when configuring the user equipment for reception of the CoMP transmission.

9. The apparatus of Claim 7, wherein to identify the timing reference for the CoMP reception the controller (425) is configured to identify the timing reference as an earliest path arrival timing among transmission points in a CoMP measurement set.

10. The apparatus of Claim 7, wherein to identify the timing reference for the CoMP reception the controller (425)is configured to identify the timing reference from a network signal comprising information about a transmission point whose reference signal is to be used as the timing reference.

11. The apparatus of Claim 7, wherein to identify the timing reference for the CoMP reception the controller (425) is configured to identify the timing reference in response to a request to configure a CoMP communication mode.

12. The apparatus of Claim 7, wherein to identify the timing reference for the CoMP reception the controller (425) is configured to identify the timing reference in response to a request to configure a CoMP measurement set.

13. The apparatus of Claim 7, wherein to identify the timing reference for the CoMP reception the controller is configured to identify the timing reference from one of a primary synchronization signal, a secondary synchronization signal, a cell-specific reference signal, and a channel-state-information reference signal.

## Patentansprüche

1. Verfahren des Betreibens einer Benutzerausrüstung, wobei das Verfahren Folgendes umfasst:
Empfangen eines oder mehrerer Signale von einem oder mehreren Sendungspunkten für eine koordinierte Mehrpunktsendung, CoMP-Sendung;
Identifizieren einer Zeitreferenz als eine Zeit, wenn ein erstes Signal von den Sendungspunkten empfangen wird (815); und
Bestimmen eines Zeitvorlaufs für eine Aufwärtsrichtungssendung für Mehrpunktempfang basierend auf der identifizierten Zeitreferenz (820).

2. Verfahren nach Anspruch 1, wobei die Zeitreferenz auf mindestens einem von einem Referenzsignal, einem Rahmen, einem Teilrahmen und einem Orthogonal-Frequenzmultiplex-Symbol basiert, das beim Konfigurieren der Benutzerausrüstung zum Empfang der CoMP-Sendung zeitlich als Erstes empfangen wird.

3. Verfahren nach Anspruch 1, wobei Identifizieren der Zeitreferenz für den CoMP-Empfang (815) Folgendes umfasst:
Identifizieren der Zeitreferenz als eine früheste Pfadankunftszeit unter Sendungspunkten in einem CoMP-Messungssatz.

4. Verfahren nach Anspruch 1, wobei Identifizieren der Zeitreferenz für den CoMP-Empfang (815) Folgendes umfasst:
Identifizieren der Zeitreferenz aus einem Netzsignal, das Informationen über einen Sendungspunkt umfasst, dessen Referenzsignal als die Zeitreferenz zu verwenden ist.

5. Verfahren nach Anspruch 1, wobei Identifizieren der Zeitreferenz für den CoMP-Empfang (815) Folgendes umfasst:
Identifizieren der Zeitreferenz in Reaktion auf eine Anforderung, eine CoMP-Kommunikationsbetriebsart zu konfigurieren.

6. Verfahren nach Anspruch 1, wobei Identifizieren der Zeitreferenz für den CoMP-Empfang (815) Folgendes umfasst:
Identifizieren der Zeitreferenz in Reaktion auf eine Anforderung, einen CoMP-Messungssatz zu konfigurieren,
wobei Identifizieren der Zeitreferenz für den CoMP-Empfang Folgendes umfasst:
Identifizieren der Zeitreferenz aus einem von einem Primärsynchronisationssignal, einem Sekundärsynchronisationssignal, einem zellenspezifischen Referenzsignal und einem Kanalzustandsinformations-Referenzsignal.

7. Vorrichtung für eine Benutzerausrüstung, wobei die Vorrichtung Folgendes umfasst:
einen Empfänger (420), der konfiguriert ist, ein oder mehrere Signale von einem oder mehreren Sendungspunkten für eine koordinierte Mehrpunktsendung, CoMP-Sendung, zu empfangen; und eine Steuerung (425), die konfiguriert ist, eine Zeitreferenz als eine Zeit zu identifizieren, wenn ein erstes Signal von den Sendungspunkten empfangen wird, und einen Zeitvorlauf für eine Aufwärtsrichtungssendung für Mehrpunktempfang basierend auf der identifizierten Zeitreferenz zu bestimmen.

8. Vorrichtung nach Anspruch 7, wobei die Zeitreferenz auf mindestens einem von einem Referenzsignal, einem Rahmen, einem Teilrahmen und einem Orthogonal-Frequenzmultiplex-Symbol basiert, das beim Konfigurieren der Benutzerausrüstung zum Empfang der CoMP-Sendung zeitlich als Erstes empfangen wird.

9. Vorrichtung nach Anspruch 7, wobei, um die Zeitreferenz für den CoMP-Empfang zu identifizieren, die Steuerung (425) konfiguriert ist, die Zeitreferenz als eine früheste Pfadankunftszeit unter Sendungspunkten in einem CoMP-Messungssatz zu identifizieren.

10. Vorrichtung nach Anspruch 7, wobei, um die Zeitreferenz für den CoMP-Empfang zu identifizieren, die Steuerung (425) konfiguriert ist, die Zeitreferenz aus einem Netzsignal zu identifizieren, das Informationen über einen Sendungspunkt umfasst, dessen Referenzsignal als die Zeitreferenz zu verwenden ist.

11. Vorrichtung nach Anspruch 7, wobei, um die Zeitreferenz für den CoMP-Empfang zu identifizieren, die Steuerung (425) konfiguriert ist, die Zeitreferenz in Reaktion auf eine Anforderung zu identifizieren, eine CoMP-Kommunikationsbetriebsart zu konfigurieren.

12. Vorrichtung nach Anspruch 7, wobei, um die Zeitreferenz für den CoMP-Empfang zu identifizieren, die Steuerung (425) konfiguriert ist, die Zeitreferenz in Reaktion auf eine Anforderung zu identifizieren, einen CoMP-Messungssatz zu konfigurieren.

13. Vorrichtung nach Anspruch 7, wobei, um die Zeitreferenz für den CoMP-Empfang zu identifizieren, die Steuerung konfiguriert ist, die Zeitreferenz aus einem von einem Primärsynchronisationssignal, einem Sekundärsynchronisationssignal, einem zellenspezifischen Referenzsignal und einem Kanalzustandsinformations-Referenzsignal zu identifizieren.

## Revendications

1. Procédé de fonctionnement d'un équipement d'utilisateur, le procédé comprenant :
la réception d'un ou plusieurs signaux en provenance d'un ou plusieurs points de transmission pour une transmission multipoint coordonnée, CoMP ;
l'identification d'une référence de timing en tant que temps auquel un premier signal est reçu en provenance des points de transmission (815) ; et
la détermination d'une avance de timing pour une transmission de liaison montante pour une réception multipoint sur la base de la référence de timing identifiée (820).

2. Procédé selon la revendication 1, dans lequel la référence de timing est basée sur au moins l'un d'un signal de référence, une trame, une sous-trame et un symbole de multiplexage par répartition de fréquence orthogonale qui est reçu en premier dans le temps lors de la configuration de l'équipement d'utilisateur pour la réception de la transmission CoMP.

3. Procédé selon la revendication 1, dans lequel l'identification de la référence de timing pour la réception CoMP (815) comprend :
l'identification de la référence de timing en tant que timing d'arrivée de trajet le plus tôt parmi des points de transmission dans un ensemble de mesures CoMP.

4. Procédé selon la revendication 1, dans lequel l'identification de la référence de timing pour la réception CoMP (815) comprend :
l'identification de la référence de timing à partir d'un signal de réseau comprenant des informations relatives à un point de transmission dont le signal de référence doit être utilisé en tant que référence de timing.

5. Procédé selon la revendication 1, dans lequel l'identification de la référence de timing pour la réception CoMP (815) comprend :
l'identification de la référence de timing en réponse à une demande de configuration d'un mode de communication CoMP.

6. Procédé selon la revendication 1, dans lequel l'identification de la référence de timing pour la réception CoMP (815) comprend :
l'identification de la référence de timing en réponse à une demande de configuration d'un ensemble de mesures CoMP,
dans lequel l'identification de la référence de timing pour la réception CoMP comprend :
l'identification de la référence de timing parmi l'un d'un signal de synchronisation primaire, un signal de synchronisation secondaire, un signal de référence spécifique à une cellule et un signal de référence d'informations d'état de canal.

7. Appareil pour un équipement d'utilisateur, l'appareil comprenant :
un récepteur (420) configuré pour effectuer la réception d'un ou plusieurs signaux en provenance d'un ou plusieurs points de transmission pour une transmission multipoint coordonnée, CoMP ; et
un organe de commande (425) configuré pour effectuer l'identification d'une référence de timing en tant que temps auquel un premier signal est reçu en provenance des points de transmission, et la détermination d'une avance de timing pour une transmission de liaison montante pour une réception multipoint sur la base de la référence de timing identifiée.

8. Appareil selon la revendication 7, dans lequel la référence de timing est basée sur au moins l'un d'un signal de référence, une trame, une sous-trame et un symbole de multiplexage par répartition de fréquence orthogonale qui est reçu en premier dans le temps lors de la configuration de l'équipement d'utilisateur pour la réception de la transmission CoMP.

9. Appareil selon la revendication 7, dans lequel, pour l'identification de la référence de timing pour la réception CoMP, l'organe de commande (425) est configuré pour effectuer l'identification de la référence de timing en tant que timing d'arrivée de trajet le plus tôt parmi des points de transmission dans un ensemble de mesures CoMP.

10. Appareil selon la revendication 7, dans lequel, pour l'identification de la référence de timing pour la réception CoMP, l'organe de commande (425) est configuré pour effectuer l'identification de la référence de timing à partir d'un signal de réseau comprenant des informations relatives à un point de transmission dont le signal de référence doit être utilisé en tant que référence de timing.

11. Appareil selon la revendication 7, dans lequel, pour l'identification de la référence de timing pour la réception CoMP, l'organe de commande (425) est configuré pour effectuer l'identification de la référence de timing en réponse à une demande de configuration d'un mode de communication CoMP.

12. Appareil selon la revendication 7, dans lequel, pour l'identification de la référence de timing pour la réception CoMP, l'organe de commande (425) est configuré pour effectuer l'identification de la référence de timing en réponse à une demande de configuration d'un ensemble de mesures CoMP.

13. Appareil selon la revendication 7, dans lequel, pour l'identification de la référence de timing pour la réception CoMP, l'organe de commande est configuré pour effectuer l'identification de la référence de timing parmi l'un d'un signal de synchronisation primaire, un signal de synchronisation secondaire, un signal de référence spécifique à une cellule et un signal de référence d'informations d'état de canal.
